# EUROPÄISCHE PATENTANMELDUNG

(11) **EP 4 345 208 A2**
(43) Veröffentlichungstag der Anmeldung: **03.04.2024**
(21) Anmeldenummer: 24152005.5
(22) Anmeldetag: 16.11.2018
(51) Int. Cl.: D21F 9/00

(54) **VERFAHREN UND VORRICHTUNG ZUR HERSTELLUNG EINER FASERMATTE**

(30) Priorität: 15.01.2018 DE 102018100735
(62) Teilanmeldung aus: 18808249.9
(71) Anmelder: Voith Patent GmbH, 89522 Heidenheim (DE)
(72) Erfinder: FRANKENREITER, Dominik, 73450 Kösingen (DE); GLONING, Alexander, 73485 Zöbingen (DE); MARTIN, Thomas, 89129 Langenau (DE)
(74) Vertreter: Voith Patent GmbH - Patentabteilung

(57) **Zusammenfassung**

Die Erfindung betrifft ein Verfahren zur Herstellung einer Fasermatte, umfassend folgende Schritte:
Sammeln und Bereitstellen der faserstoffhaltigen Ware, insbesondere Recyclingware;
Wasserarme Aufbereitung der faserstoffhaltigen Ware, insbesondere Recyclingware, im Luftstrom zu Rohstoffware umfassend Einzelfasern und/oder Faserbündel;
Formieren der Einzelfasern und/oder Faserbündel (12) im Luftstrom zu einer flächigen Fasermatte (10) auf einem Formierband (5) durch ein Trockenformierungsverfahren;
Aufbringen von Wasser auf die Fasern der formierten Fasermatte (10);
Verfestigen der formierten Fasermatte (10);
wobei die Fasermatte (10) im Verfestigungsschritt e) zwischen zwei, jeweils eine der Fasermatte (10) zugewandten Kontaktfläche aufweisenden, Stützelementen (9a, 9b) liegend mit einer Presszeit von weniger als 1s, insbesondere von weniger als 0,8s, vorzugsweise von weniger als 0,5s gepresst wird und wobei das Formierband (5) und/oder wenigstens eines der beiden Stützelement (9b), welches als Band ausgeführt ist, als Membran ausgeführt ist bzw. sind.

## Beschreibung

Die Erfindung betrifft ein Verfahren zur Herstellung einer Fasermatte, sowie eine Vorrichtung zur Durchführung des Verfahrens und eine nach dem Verfahren hergestellte Fasermatte.

Bei der bekannten Papierherstellung werden die in einer Stoffaufbereitung aufbereiteten Naturfasern, wie beispielsweise Zellstofffasern, mit Wasser zu einer Fasersuspension vermischt und gleichmäßig auf ein Entwässerungssieb einer Formiereinheit aufgebracht, dort mechanisch entwässert und die gebildete Faserstoffbahn zur weiteren mechanischen Entwässerung durch eine Presse geführt und anschließend thermisch getrocknet. Die wässrige Faserstoffsuspension besitzt dabei sehr kleine Stoffdichten, von beispielsweise 1%, das heißt die Fasern werden mit sehr viel Wasser vermischt. Dies ist für eine homogene Durchmischung der Fasern mit Wasser notwendig und Voraussetzung für die Bildung einer gleichmäßigen Faserstoffbahn. Auch wird durch das Wasser die Bindung zwischen den Fasern durch Wasserstoffbrücken ermöglicht, wodurch eine Faserstoffbahn mit einer guten mechanischen Festigkeit erzielt wird. Diese Prozesse erfordern einen hohen apparativen und energetischen Aufwand. Insbesondere erfordert das thermische Trocknen der Faserstoffbahn von ca. 50% Trockengehalt nach der Presse auf über 90% Endtrockengehalt große Trockenpartien und große Mengen thermischer Energie.

Im Dokument DE2314893A wird ein Verfahren zur Herstellung einer Faserstoffbahn ohne Verwendung großer Wassermassen vorgeschlagen. Dabei wird ein Vlies aus im Wesentlichen trockenen Fasern hergestellt und mit Wasser auf unterhalb der Quellfeuchtigkeitsaufnahme angefeuchtet. In einem weiteren Schritt wird das befeuchtete Vlies durch eine beheizte Druckzone geführt. Die Druckzone ist so gestaltet, dass das aufgebrachte Wasser genügend Zeit hat, in die Fasern einzudringen um die Schmiegsamkeit der Fasern zu erhöhen und die Voraussetzung für das Eingehen der chemischen Bindungsanteile zwischen den Fasern zu schaffen.

Die Aufgabe der Erfindung ist es, ein verbessertes Verfahren und eine verbesserte Vorrichtung für die wirtschaftliche Herstellung einer Fasermatte mit geringeren Investitions- und Energiekosten anzugeben.

Die Aufgabe wird durch Merkmale des Anspruches 1 gelöst. Es wird ein Verfahren zur Herstellung einer Fasermatte, die insbesondere zur Verwendung bei der Herstellung von Verpackungskarton oder faserstoffhaltigen Konstruktionselementen geeignet ist, aus einer faserstoffhaltigen Ware, insbesondere Recyclingware, umfassend Wellpappenabfälle und/oder Kartonabfälle und/oder Altpapier und/oder Papier- oder Kartonabfälle aus der Papierherstellung, vorgeschlagen. Das Verfahren umfasst folgende Schritte:
a. Sammeln und Bereitstellen der faserstoffhaltigen Ware, insbesondere Recyclingware;
b. Wasserarme Aufbereitung der faserstoffhaltigen Ware, insbesondere Recyclingware, im Luftstrom zu Rohstoffware umfassend Einzelfasern und/oder Faserbündel;
c. Formieren der Einzelfasern und/oder Faserbündel im Luftstrom zu einer flächigen Fasermatte durch ein Trockenformierungsverfahren auf einem Formierband;
d. Aufbringen von Wasser auf die Fasern der formierten Fasermatte;
e. Verfestigen der formierten Fasermatte;
wobei vorgesehen ist, dass die Fasermatte im Verfestigungsschritt e) zwischen zwei, jeweils eine der Fasermatte zugewandten Kontaktfläche aufweisenden, Stützelementen liegend mit einer Presszeit von weniger als 1s, insbesondere von weniger als 0,8s, vorzugsweise von weniger als 0,5s gepresst wird und wobei das Formierband und/oder wenigstens eines der beiden Stützelement, welches als Band ausgeführt ist, als Membran ausgeführt ist bzw. sind.

Das erfindungsgemäße Verfahren ermöglicht die wirtschaftliche Herstellung einer Fasermatte, welche zumindest zum Teil natürliches Fasermaterial umfasst. Die Ware, insbesondere Recyclingware, kann mindestens ein Fasermaterial aus der Gruppe Zellstoff, Holzstoff, Baumwolle, Einjahrespflanzen wie Bambus, Stroh, Gras, Hanf, umfassen. Für die Aufbereitung der Ware, insbesondere Recyclingware, sind höchstens nur geringe zusätzliche Wassermengen erforderlich. Für die Aufbereitung kann auch die schon in der bereitgestellten, lufttrockenen Ware, insbesondere Recyclingware, enthaltene Wassermenge ausreichend sein. Der Trockengehalt der gesammelten lufttrockenen Ware, insbesondere Recyclingware, liegt üblicherweise bei 1% bis 10%.

Die Erfinder haben erkannt, dass ein kurzer Pressimpuls für die Verfestigung der Fasern der Fasermatte für eine ausreichende mechanische Festigkeit genügt. Gleichzeitig kann dadurch eine gute Qualität hinsichtlich der Gebrauchseigenschaften der Fasermatte mit geringem Aufwand erreicht werden.

In einer möglichen Ausführung wird die Ware, insbesondere Recyclingware, im Aufbereitungsschritt zerkleinert, von Störstoffen befreit und in Einzelfasern und/oder Faserbündel, beispielsweise in Hochkonsistenzrefinern oder in Querstromzerfaserern oder in Mühlen zerlegt. Anschließend kann eine Reinigung der Fraktion der Einzelfasern und/oder Faserbündel erfolgen. In diesem Schritt werden weitere Störstoffe entfernt.

Das Formieren der Einzelfasern und/oder der Faserbündel im Luftstrom zu einer flächigen Fasermatte durch ein Trockenformierungsverfahren erfordert nur einen Bruchteil der Energie der bekannten Papierherstellungsverfahren. Die Erfinder haben herausgefunden, dass eine kurze Presszeit im Verfestigungsschritt für eine ausreichende Bindung zwischen den Einzelfasern und/oder Faserbündel zur Bildung einer Fasermatte ausreichend ist. Gleichzeitig wird durch die kurze Presszeit ein Eindringen des aufgebrachten Wassers in die Einzelfasern und/oder Faserbündel erschwert. Gerade dies hat sich jedoch als Vorteil hinsichtlich eines geringeren Energiebedarfs herausgestellt. Das in die Fasern eingedrungene Wasser lässt sich nur mit thermischer Energie wieder entfernen. Der thermische Trocknungsaufwand zum Trocknen der Fasermatte ist somit vergleichbar mit dem für eine konventionell hergestellte Papierbahn nach der Pressenpartie einer Papiermaschine. Für eine nach dem erfindungsgemäßen Verfahren hergestellten Fasermatte hingegen wird der thermische Trocknungsaufwand reduziert oder ganz vermieden, da das aufgebrachte Wasser sich größtenteils nur auf der Oberfläche der Einzelfasern und/oder der Faserbündel befindet.

In einer praktischen Ausgestaltung wird die Fasermatte mit einer Presszeit von mehr als 0,01ms, insbesondere von mehr als 0,1ms, vorzugsweise von mehr als 1ms gepresst. Dies begünstigt die gegenseitige Bindung der Einzelfasern und/oder Faserbündel an den Berührpunkten. Das adhäsive Bindungsvermögen der Einzelfasern und/oder Faserbündel wird dadurch in nennenswerter Weise genutzt, insbesondere durch Ausbildung von Wasserstoffbrücken. Das entstehende Fasernetzwerk der Fasermatte erhält dadurch eine hohe Festigkeit.

Vorzugsweise folgt der Verfestigungsschritt e) nach maximal 20s, insbesondere nach maximal 10s, vorzugsweise nach maximal 5s auf den Aufbringschritt d). Dies verhindert das Eindringen des aufgebrachten Wassers in das Innere der Einzelfasern und/oder Faserbündel vor dem Verfestigungsschritt e), wodurch der Aufwand für die thermische Trocknung der Fasermatte reduziert oder sogar vermieden wird.

In einer vorteilhaften Ausführung wird der Verfestigungsschritt e) so ausgeführt, dass die Fasermatte danach einen Trockengehalt von mehr als 50%, insbesondere mehr als 70%, vorzugsweise mehr als 80%, besonders vorzugsweise mehr als 90% aufweist. Dies kann beispielsweise durch Aufheizen der Fasermatte im Verfestigungsschritt beeinflusst werden.

In einem praktischen Fall wird der Aufbereitungsschritt b) mit Fasern, beziehungsweise mit Ware, insbesondere Recyclingware, mit einem Trockengehalt von mehr als 50%, insbesondere mehr als 70% und vorzugsweise von mehr als 80% durchgeführt. Insbesondere kann die Ware, insbesondere Recyclingwarte, dabei auch lufttrocken sein.

In einer möglichen Ausgestaltung des Formierschritts c) wird ein sehr lockeres Gelege von Einzelfasern und/oder Faserbündel erzeugt. Dabei wird im Formierschritt c) eine flächige Fasermatte mit einem spezifischen Volumen von mehr als 12cm³/g, insbesondere von mehr als 20cm³/g, vorzugsweise von mehr als 25cm³/g gelegt. Dies wirkt sich zum einen günstig auf die homogene Verteilung der Einzelfasern und/oder Faserbündel im Volumen der Fasermatte und zum anderen auf die Wirkung und Gleichmäßigkeit der Verteilung des aufgebrachten Wassers aus. Dadurch kann eine Fasermatte mit einer homogenen Festigkeitsverteilung bei Einsatz minimaler Wassermenge erzielt werden.

In einem praktischen Fall kann nach dem Formierschritt c) die flächige Fasermatte vorkomprimiert wird, insbesondere auf einen Wert von mehr als 50% vorzugsweise von mehr als 70% des spezifisches Volumens der im Formierschritt e) gelegten Fasermatte. Oder anders ausgedrückt: die Komprimierung wird so ausgeführt, dass die Dicke der gelegten Fasermatte unmittelbar nach der Komprimierung minimal 50%, vorzugsweise minimal 70% der Dicke der gelegten Fasermatte nach dem Formierschritt und vor dem Komprimierschritt beträgt. Dies verbessert die Stabilität der gelegten Fasermatte. Dies gilt besonders bei einer kontinuierlichen Herstellung der Fasermatte. Die Fasermatte wird dadurch unempfindlich gegenüber auftretenden Luftströmungen.

Vorteilhafterweise wird im Aufbringschritt d) die gelegte Fasermatte mit einer Wassermenge im Bereich zwischen 5% und 50%, insbesondere zwischen 5% und 40%, vorzugsweise zwischen 5% und 30% der Masse der gelegten Fasermatte beaufschlagt. Es sind auch Wassermengen zwischen 5% und 20% oder zwischen 5% und 10% denkbar. Dies wirkt sich energetisch günstig aus.

Eine Möglichkeit zur Aufbringung des Wassers besteht darin, dass im Aufbringschritt d) die Oberseite und/oder die Unterseite der gelegten Fasermatte mit Wassertropfen besprüht wird und vorteilhafterweise die Wassertropfen eine Tropfengröße im Durchmesser von kleiner oder gleich 3 mm, insbesondere von kleiner oder gleich 2mm, vorzugsweise von kleiner oder gleich 1mm aufweisen. Dies verbessert die Geschwindigkeit der Benetzung der Oberflächen der Einzelfasern und/oder der Faserbündel der gelegten Fasermatte.

Vorzugsweise wird im Aufbringschritt d) Wasser mittels eines mit der Oberseite und/oder der Unterseite der gelegten Fasermatte in einem Kontaktbereich in Kontakt bringbaren Auftragselement aufgetragen.

Das Auftragselement kann zumindest im Kontaktbereich mit einer porösen, vorzugsweise kompressiblen Schicht, zur Speicherung und Abgabe von Wasser versehen sein. Die Schicht kann beispielsweise als Schwamm ausgeführt sein. Der Schwamm kann auf einem härteren Trägerelement aufgebracht sein.

In einer weiteren Ausgestaltung wird das Auftragselement zumindest im Kontaktbereich mit einer strukturierte Oberfläche zur Speicherung und Abgabe von Wasser versehen.

Es ist auch möglich, dass das Auftragselement durch mindestens ein Stützelement gebildet wird.

Das Auftragselement ist vorzugsweise im kontinuierlichen Herstellungsprozess als Walze oder im diskontinuierlichen Herstellungsprozess als Stempel ausgeführt.

In einem praktischen Fall kann im Aufbringschritt d) die Oberseite und/oder die Unterseite der gelegten Fasermatte mit Dampf beaufschlagt werden.

Die Temperatur des Dampfes ist vorzugsweise derart auf die Temperatur der Fasermatte abgestimmt, dass der Dampf beim Auftreffen auf die Oberseite und/oder auf die Unterseite der gelegten Fasermatte kondensiert.

In einer möglichen Weiterbildung wird der Dampf derart auf die Fasermatte aufgegeben, dass auf der Oberseite und/oder auf der Unterseite der gelegten Fasermatte Wassertropfen mit einer Tropfengröße im Durchmesser von kleiner oder gleich 3 mm, insbesondere von kleiner oder gleich 2mm, vorzugsweise von kleiner oder gleich 1mm gebildet werden.

Das Wasser kann auch in Form von Dampf, der vorzugsweise bei einer Temperatur über der Temperatur der Fasermatte gesättigt ist, auf die Oberseite und/oder Unterseite der Fasermatte aufgebracht werden.

Das Wasser kann auch in Form von Dampf, der vorzugsweise bei einer Temperatur über der Temperatur der Fasermatte gesättigt ist, aufgebracht werden, wobei die Fasermatte vom Dampf durchströmt wird. Vorzugsweise kondensiert der Dampf an den Einzelfasern und/oder den Faserbündel der Fasermatte. Dadurch lässt sich das Wasser sehr gleichmäßig in der Fasermatte verteilen.

In einer vorteilhaften Ausgestaltung wird zumindest ein Stützelement im Verfestigungsschritt e) derart ausgebildet, dass die Fasermatte vollflächig oder zonenweise vollflächig gestützt wird. Durch die vollflächige oder zonenweise vollflächige Stützung wird im Verfestigungsschritt durch die Pressung der Kontakt an den Kontaktpunkten der sich berührenden Fasern verstärkt und somit die Verfestigung verbessert. Eine zonenweise vollflächige Stützung erzeugt in den Zonen Stützzonen. Sie wirkt sich bei der Herstellung beispielsweise von Tissuepapieren vorteilhaft aus. Die Fasermatte wird in den Stützzonen gepresst und verdichtet, sodass dort eine Verfestigung erzielt wird, während zwischen den Stützzonen nicht oder weniger gepresst beziehungsweise verdichtet wird. Zwischen den Stützzonen entstehen dadurch Bereiche mit einem größeren spezifischen Volumen. Diese Bereiche wirken sich beim Gebrauch von Tissuepapieren durch eine höhere Wasseraufnahme und höhere Flauschigkeit vorteilhaft aus.

Vorzugsweise wird zumindest ein Stützelement im Verfestigungsschritt e) permeabel oder impermeabel ausgeführt.

Die Kontaktfläche mindestens eines Stützelementes wird vorzugsweise glatt zur Glättung oder mit einer Struktur zur Strukturierung oder zur zonenweisen vollflächigen Verfestigung der Fasermatte ausgeführt. Dabei wird die Struktur in ihren Abmessungen, insbesondere die Strukturtiefe und der Abstand der Strukturspitzen, so ausgeführt, dass die Fasermatte vollflächig unterstützt wird. Eine Brückenbildung der Fasermatte zwischen Strukturspitzen wird so vermieden. Die vollflächige Unterstützung bewirkt eine gleichmäßige Ausbildung der Festigkeit im Bereich der Kontaktfläche.

Zur Erwärmung der Fasermatte wird vorzugsweise mindestens ein Stützelement direkt oder indirekt beheizt, vorzugsweise auf eine Temperatur zwischen 20°C und 300°C. Hierdurch kann die adhäsive Bindung zwischen den Einzelfasern und/oder den Faserbündel gefordert werden und der Trockengehalt der Fasermatte nach dem Verfestigungsschritt beeinflusst werden.

In einer praktischen Ausführungsvariante wird mindestens ein Stützelement als Band ausgeführt. Das Stützelement kann um eine oder mehrere Walzen geführt sein.

Ein als Band ausgeführtes Stützelement kann Stützzonen aufweisen, sodass die Fasermatte zonenweise vollflächig gestützt wird. Dabei kann es sich um eine als Band ausgeführte Folie oder eine Membran handeln. Das Band ist in diesem Beispiel permeabel und weist in Dickenrichtung Öffnungen, Bohrungen oder dergleichen auf. Die zwischen den Öffnungen liegenden Landflächen bilden die Stützzonen. Die Landflächen selbst können eine Strukturierung aufweisen. Die Durchmesser der Öffnungen können im Bereich zwischen 0,1 mm und weniger als 3 mm liegen. Der Abstand benachbarter Öffnungen liegt vorzugsweise im Bereich von 0,3 mm bis 3 mm.

In einer vorteilhaften Ausführung können die Öffnungen des Bandes durch Bohren mittels Laser erzeugt sein. Dies ermöglicht eine wirtschaftliche Herstellung kleiner Öffnungen.

In einer möglichen Weiterentwicklung wird das Stützelement als Band eines Bandkalanders gebildet und das Material des Bandes vorzugsweise Metall oder Kunststoff oder Verbundmaterial umfasst.

Ferner kann es von Vorteil sein, wenn dem als Band ausgeführten Stützelement ein auf der Fasermatte abgewandten Seite angeordnetes Presselement zum Pressen der Fasermatte zugeordnet wird, wobei das Presselement als Walze, als Schuhwalze oder als Bandpresse ausgeführt sein kann.

Es ist auch möglich, wenn mindestens ein Stützelement als Walze, beispielsweise einer Presswalze, zum Pressen der Fasermatte ausgeführt wird. Die Walzenoberfläche kann zur Glättung der Fasermatte glatt oder mit einer Struktur zur Strukturierung der Fasermatte ausgeführt werden.

Vorzugsweise wird im Formierschritt c) die Fasermatte auf einem vorzugsweisen permeablen Formierband, insbesondere auf einem gewobenen Formierband, gebildet. Das Formierband kann luftdurchlässig oder auch wasserdurchlässig sein. Dadurch lässt sich die Ablage der Fasermatte stabilisieren. Zudem kann das Formierband so ausgeführt sein, dass eine elektrostatisch aufgeladen werden kann. Dies stabilisiert die Ablage der Einzelfasern und/oder Faserbündel auf dem Formierband.

In einer vorteilhaften Ausführungsvariante wird das Formierband durch ein Stützelement gebildet. Dabei ist es vorteilhaft, wenn der Verfestigungsschritt e) auf dem Stützelement ausgeführt wird. Dies ermöglicht ein Verfahren in kompakter und kostengünstiger Bauweise.

In einer möglichen Weiterbildung wird die gelegte Fasermatte von dem permeablen Formierband auf ein Stützelement übertragen. Dies ermöglicht sowohl eine Abstimmung der Ausführung des Formierbands auf die spezifischen Anforderungen des Formierschritts als auch eine Abstimmung der Ausführung des Stützelementes auf die spezifischen Anforderungen des Verfestigungsschrittes.

Das Stützelement kann elektrostatisch geladen werden, um insbesondere den Transfer der Fasermatte vom Formierband zum Stützelement zu unterstützen.

Vorzugsweise wird die flächige Fasermatte endlos hergestellt. Dieser kontinuierliche Herstellungsprozess ist besonders dann vorteilhaft, wenn die Fasermatte als Verpackungskarton verwendet wird.

Es ist jedoch auch denkbar, wenn die flächige Fasermatte stückweise hergestellt wird. In diesem Fall können die in einem diskontinuierlichen Prozess einzeln hergestellten Stücke der Fasermatte ein Endprodukt sein oder zu einem Endprodukt verarbeitet werden. Beispielsweise können aus den einzelnen Stücken Schachteln hergestellt werden.

In einem diskontinuierlichen Prozess kann die flächige Fasermatte in einer räumlichen Formierform zur Erzeugung eines dreidimensionalen Produktes formiert werden. Dreidimensionale Produkte können Schachteln, Kisten usw. oder Teile davon sein.

Entsprechend der Erfindung wird die Aufgabe auch durch eine Vorrichtung zur Durchführung des zuvor beschriebenen Verfahrens zur Herstellung einer Fasermatte gelöst, die insbesondere zur Verwendung bei der Herstellung von Verpackungskarton oder faserstoffhaltigen Konstruktionselementen geeignet ist, aus einer faserstoffhaltigen Ware, insbesondere Recyclingware, umfassend Wellpappenabfälle und/oder Kartonabfälle und/oder Altpapier und/oder Papier- oder Kartonabfälle aus der Papierherstellung, mit einer Aufbereitungsanlage zur wasserarmen Aufbereitung der faserstoffhaltigen Ware, insbesondere Recyclingware, im Luftstrom zu Rohstoffware, welche Einzelfasern und/oder Faserbündel umfasst; und mit einer Trockenformiervorrichtung zum Formieren der Einzelfasern und/oder Faserbündel im Luftstrom zu einer flächigen Fasermatte auf einem Formierband, sowie mit einer Befeuchtungseinrichtung zum Aufbringen von Wasser auf die Fasern der formierten Fasermatte und mit einer Verfestigungsvorrichtung zum Verfestigen der formierten Fasermatte, wobei die Fasermatte in der Verfestigungsvorrichtung zwischen zwei, jeweils eine der Fasermatte zugewandten Kontaktfläche aufweisenden, Stützelementen angeordnet ist und gepresst wird und dass die Verfestigungsvorrichtung derart ausgeführt ist, dass die Presszeit weniger als 1s, insbesondere weniger als 0,8s, vorzugsweise weniger als 0,5s beträgt und wobei das Formierband und/oder wenigstens eines der beiden Stützelement, welches als Band ausgeführt ist, als Membran ausgeführt ist bzw. sind.

Die Erfindung erstreckt sich ausdrücklich auch auf solche Ausführungsformen, welche nicht durch Merkmalskombinationen aus expliziten Rückbezügen der Ansprüche gegeben sind, wodurch die offenbarten Merkmale der Erfindung - soweit dies technisch sinnvoll ist - beliebig miteinander kombiniert sein können.

Weitere Merkmale und Vorteile der Erfindung ergeben sich aus der nachfolgenden Beschreibung bevorzugter Ausführungsbeispiele unter Bezugnahme auf die Zeichnungen.

Es zeigen
- Figur 1: eine erste mögliche Ausführungsform einer erfindungsgemäßen Vorrichtung in vereinfachter Darstellung;
- Figur 2: eine zweite mögliche Ausführungsform einer erfindungsgemäßen Vorrichtung in vereinfachter Darstellung;
- Figur 3: eine weitere mögliche Ausführungsform einer erfindungsgemäßen Vorrichtung in vereinfachter Darstellung;
- Figur 4a: beispielhaft eine Fasermatte mit aufgebrachtem Wasser im Querschnitt in vereinfachter Darstellung;
- Figur 4b: beispielhaft eine Fasermatte mit aufgebrachtem Wasser nach Figur 4a in Draufsicht in vereinfachter Darstellung;
- Figur 5a: eine erste mögliche Variante einer erfindungsgemäßen Vorrichtung für den diskontinuierlichen Herstellungsprozess in vereinfachter Darstellung;
- Figur 5b: eine zweite mögliche Variante einer erfindungsgemäßen Vorrichtung für den diskontinuierlichen Herstellungsprozess in vereinfachter Darstellung;

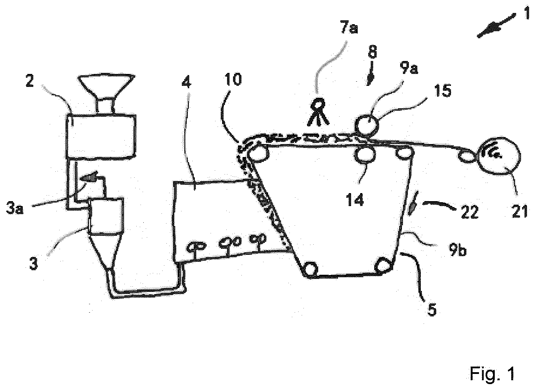

Die Figur 1 zeigt eine erste mögliche Ausführungsform einer erfindungsgemäßen Vorrichtung 1 zur Herstellung einer Fasermatte 10 in vereinfachter Darstellung. Die bereitgestellte Ware, insbesondere Recyclingware, welche natürliche Fasern enthält, die beispielsweise aus der Gruppe Zellstoff, Holzstoff, Baumwolle, Einjahrespflanzen wie Bambus, Stroh, Gras, Hanf, ausgewählt sein können, wird einer Aufbereitungsanlage 2 über einen Trichter zugeführt. Die Ware, insbesondere Recyclingware, ist in lufttrockenem Zustand, das heißt der Trockengehalt hat sich auf einen Gleichgewichtswert entsprechend den klimatischen Verhältnissen der Umgebung eingestellt. Die Ware, insbesondere Recyclingware, kann jedoch auch leicht befeuchtet sein, so dass sie beispielsweise mit einem Trockengehalt im Bereich von mehr als 80% vorliegt. Die Befeuchtung kann grundsätzlich überall in der Aufbereitungsanlage 2 stattfinden. Dort wird die Ware, insbesondere Recyclingware, zerkleinert, von Störstoffen befreit und in Einzelfasern und/oder Faserbündel 12, beispielsweise in Hochkonsistenzrefinern oder in Querstromzerfaserern oder in Mühlen zerlegt. Anschließend kann eine Reinigung der Fraktion der Einzelfasern und/oder Faserbündel 10 erfolgen. In diesem Schritt werden weitere Störstoffe entfernt. Diese Aufbereitung erfolgt im Luftstrom, der die Einzelfasern und/oder Faserbündel 10 trägt, eine gleichmäßige räumliche Verteilung ermöglicht und transportiert. Anschließend werden die im Luftstrom noch enthaltenen Störstoffe in einem als Zyklon 3 ausgeführten Abscheider über den Luftstrom 3a ausgeschleust. Der Anteil des Luftstromes mit den Einzelfasern und/oder Faserbündel 10 wird einer Trockenformiervorrichtung 4 zugeführt. Sie ist gegenüber einem mit einer Geschwindigkeit umlaufenden, endlosen permeablen oder impermeablen Formierband 5, das als gewobenes Sieb oder als Membran ausgeführt sein kann, angeordnet und umfasst einen abgeschlossenen Raum mit Verwirbelungselementen zur homogenen Verteilung der Einzelfasern und/oder Faserbündel 10 im Luftstrom. Der abgeschlossene Raum ist zum Formierband 5 hin offen, sodass die Einzelfasern und/oder Faserbündel 10 auf dem Formierband 5 zur Bildung einer Fasermatte 10 abgelegt werden können. Die gebildete Fasermatte 10 wird so abgelegt, dass ein sehr hohes spezifisches Volumen von mehr als 12 cm³/g erreicht wird. Im Bereich der Bildung der Fasermatte 10 verläuft das Formierband 5 in diesem Beispiel unter einem Winkel schräg nach oben. Auf der der Trockenformiervorrichtung 4 gegenüberliegenden Seite des Formierbands 5 können im Falle eines impermeablen Formierbands 5, hier nicht dargestellte, Saugelemente zur Unterstützung der Bildung der Fasermatte 10 angeordnet sein. Zur weiteren Unterstützung der Bildung und des Transports der Fasermatte 10 kann, insbesondere im Falle eines impermeablen Formierbands 10, das Formierband 5 elektrostatisch aufgeladen sein. Die abgelegte Fasermatte 10 wird auf dem Formierband 5 liegend zu einem horizontal verlaufenden Abschnitt geführt. In diesem Abschnitt ist eine Befeuchtungseinrichtung 7a zum Aufbringen von Wasser auf die Einzelfasern und/oder Faserbündel 10 der formierten Fasermatte 10. Das Wasser wird in diesem Beispiel durch eine Sprühdüse auf die Oberseite der gelegten Fasermatte 10 in Form von kleinen Tröpfchen 13 aufgebracht. Da die Tröpfchen 13 klein sein sollen ist die Sprühdüse so ausgeführt, die Durchmesser der Tröpfchen 13 kleiner oder gleich 3 mm sind. Die aufgetragene Wassermenge sollte möglichst klein sein und gerade ausreichend sein, um das adhäsive Bindungspotential zwischen den Einzelfasern und/oder Faserbündel zu aktivieren. Grundsätzlich kann das Wasser auch in Form von Wasserdampf, dessen Zustand derart eingestellt ist, dass der Dampf beim Auftreffen auf die Einzelfasern und/oder Faserbündel 10 kondensiert, aufgetragenen werden. Die Auftragsmenge an Wasser liegt in diesem Beispiel zwischen 5% und 20% der Masse der gelegten Fasermatte 10. Der Befeuchtungseinrichtung 7a ist eine Verfestigungseinrichtung 8 in einem Abstand nachgeordnet. Der Abstand ist dabei so gewählt, dass möglichst wenig Wasser in das Innere der Einzelfasern und/oder Faserbündel eindringen kann und zur Bindung an den Oberflächen der Einzelfasern und/oder Faserbündel 12 zur Verfügung steht. Die Verfestigungsvorrichtung 8 folgt spätestens nach 20s nach dem Aufbringen von Wasser. Der Abstand richtet sich daher nach der Geschwindigkeit des in einer Laufrichtung 22 umlaufenden Formierbands 5. In der Verfestigungseinrichtung 8 wird die befeuchtete Fasermatte 10 zwischen einem Stützelement 9b, in diesem Falle dem Formierband 5, und einem beheizten Stützelement 9a liegend gepresst und erwärmt. Das Stützelement 9a wird durch eine Presswalze 15 gebildet. Es ist auch möglich das Stützelement 9a als beheizbare Kalanderwalze auszuführen. Das Formierband 5 und das Stützelement 9a weisen jeweils eine Kontaktfläche, die mit der Fasermatte 10 in direktem Kontakt steht auf. Die Presszeit beträgt hierbei weniger als 1s und jedoch mehr als 0,01ms (Millisekunden). Die Presszeit oder Pressdauer in dem durch die Presswalze 15 und einem dieser gegenüberliegendem Presselement 14 gebildeten Pressspalt kann durch die Gestaltung der Presswalze 15 und dem Presselement 14 festgelegt werden. So kann das Presselement 14 und/ oder die Presswalze 15 mit einem harten oder weichen Walzenbezug ausgestattet werden und so die Länge des Pressspaltes und somit, für eine bestimmte Geschwindigkeit mit der sich die Fasermatte 10 bewegt, auch die Presszeit festgelegt werden. Eine weitere Möglichkeit besteht darin das Presselement 14 als Schuhwalze oder Bandpresse oder Bandkalanders mit verlängertem Pressspalt auszuführen. Die Verfestigungsvorrichtung 8 wird derart gestaltet und betrieben, dass der Trockengehalt der verfestigten Fasermatte am Ende der Verfestigungsvorrichtung 8 mehr als 80% beträgt. Dies reduziert oder vermeidet den Aufwand für ein thermisches Trocknen der Fasermatte 10. Nach der Verfestigungsvorrichtung 8 wird die Fasermatte 10 vom Formierband 5 weggeführt und zu einer Aufrollung 21 weitergeleitet.

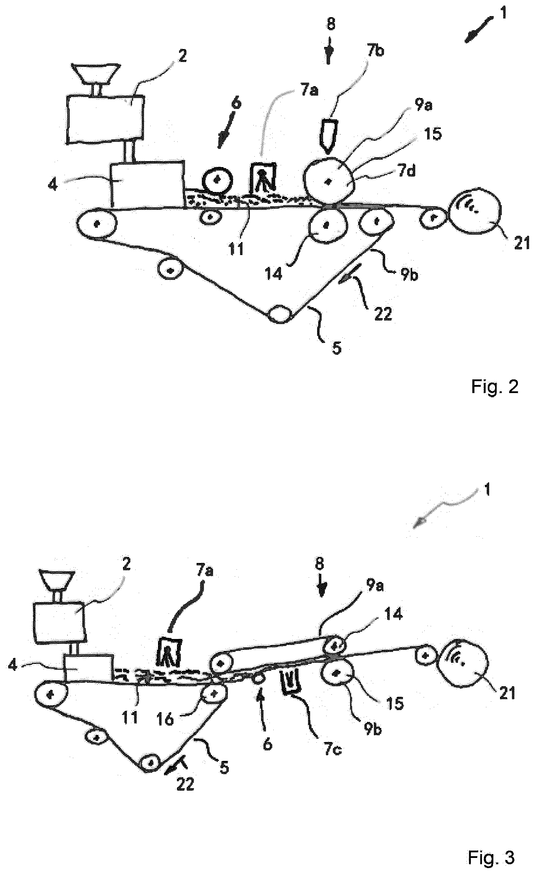

Eine zweite mögliche Ausführungsform einer erfindungsgemäßen Vorrichtung 1 ist in Figur 2 in vereinfachter Darstellung gezeigt. Bezüglich der Beschreibung der den Elementen in Figur 1 entsprechenden Elemente mit gleichem Bezugszeichen wird auf die Beschreibung in Figur 1 verwiesen. Auch in diesem Ausführungsbeispiel wird die bereitgestellte Ware, insbesondere Recyclingware, einer Aufbereitungsanlage 2 über einen Trichter zugeführt und dort zu Einzelfasern und/oder Faserbündel aufbereitet. Anschließend erfolgt ein Ablegen der Einzelfasern und/oder Faserbündel in einer Trockenformiereinrichtung 4 auf der Oberseite des horizontal verlaufenden Teils des Formierbands 5. Nach der Trockenformiereinrichtung 4 erfolgt ein leichtes Vorkomprimieren der Fasermatte 10 durch eine Verdichtungseinrichtung 6 vor einer Befeuchtungseinrichtung 7a, 7b auf 70% des spezifischen Volumens der Fasermatte 10 vor der Verdichtungseinrichtung 6. Das heißt die Fasermattendicke 11 nach der Verdichtungseinrichtung 6 beträgt 70% der Fasermattendicke 11 vor der Verdichtungseinrichtung 6. Anschließend werden die Einzelfasern und/oder Faserbündel 12 der Fasermatte 10 durch eine Befeuchtungseinrichtung 7a, 7b befeuchtet. In diesem Beispiel werden die Einzelfasern und/oder Faserbündel 12 der Fasermatte zweimal hintereinander durch jeweils eine Befeuchtungseinrichtung 7a, 7b befeuchtet, bevor sie die Verfestigungsvorrichtung 8 durchläuft. Die zweite Befeuchtungseinrichtung 7b wird durch das als Presswalze 15 ausgeführte Stützelement 9a und einer Wasserauftragsdüse gebildet, wobei die Presswalze 15 gleichzeitig als Auftragselement 7d fungiert. Die beiden Befeuchtungseinrichtungen 7a, 7b können beide zur Anwendung kommen. Es ist allerdings auch möglich, dass nur eine von den beiden Befeuchtungseinrichtungen 7a, 7b vorgesehen sein kann. Die Oberfläche der Presswalze 15 berührt in einem Kontaktbereich die Fasermatte 10 direkt und weist eine Struktur oder eine poröse Schicht zur Aufnahme und Speicherung von Wasser auf, das durch eine Wasserauftragsdüse oder im Falle von Dampf über einen Dampfauftragskasten auf die Oberfläche aufgetragen wird. Die Presswalze 15 bildet mit dem Presselement 14 den Pressspalt der Verfestigungsvorrichtung 8. Hier wird das Wasser also unmittelbar vor der Verfestigungsvorrichtung 8 auf die Oberseite der Fasermatte aufgebracht. Nach der Verfestigungsvorrichtung 8 wird die Fasermatte 10 wieder einer Aufrollung zugeführt. Die gebildete Fasermatte 10 wird so abgelegt, dass ein sehr hohes spezifisches Volumen von mehr als 12 cm³/g erreicht wird. Die Auftragsmenge an Wasser liegt in diesem Beispiel zwischen 5% und 20% der Masse der gelegten Fasermatte 10. Der Befeuchtungseinrichtung 7a ist eine Verfestigungseinrichtung 8 in einem Abstand nachgeordnet. Der Abstand ist dabei so gewählt, dass möglichst wenig Wasser in das Innere der Einzelfasern und/oder Faserbündel eindringen kann und zur Bindung an den Oberflächen der Einzelfasern und/oder Faserbündel 12 zur Verfügung steht. Die Verfestigungsvorrichtung 8 folgt spätestens nach 20s nach dem Aufbringen von Wasser. Die Presszeit in der Verfestigungsvorrichtung 8 beträgt hierbei weniger als 1s und jedoch mehr als 0,01ms.

Im Beispiel der Figur 3 ist eine weitere Ausführungsform der Vorrichtung 1 der Erfindung in vereinfachter Darstellung gezeigt, bei der die Verfestigungsvorrichtung 8 nicht am Formierband 5 angeordnet ist, sondern im Bereich eines nachgeordneten Stützelements 9a, das als Band ausgeführt ist. Die Einzelfasern und/oder Faserbündel 12 werden wieder auf dem Formierband 5 zu einer lockeren Fasermatte 10 mit einer Fasermattendicke 11 formiert und optional durch eine Befeuchtungseinrichtung 7a befeuchtet. Anschließend wird die Fasermatte 10 durch ein als Band ausgeführtes Stützelement 9a vom Formierband 5 abgenommen. Das umlaufende, endlose Band ist über eine erste und eine zweite Walze geführt, wobei die zweite Walze als Presselement 14 in der Verfestigungsvorrichtung 8 fungiert. Dieses bildet zusammen mit dem als Presswalze ausgeführten Stützelement 9b den Pressspalt der Verfestigungsvorrichtung 8. Die Stützelemente 9a, 9b weisen Kontaktflächen auf, welche in direktem Kontakt mit der Fasermatte 10 stehen. In diesem Beispiel sind beide Kontaktflächen impermeabel und derart beschaffen, dass die Fasermatte 10 vollflächig unterstützt wird. Vor der Verfestigungsvorrichtung 8 kann optional eine Befeuchtungseinrichtung 7c vorgesehen sein, um Wasser auf die Unterseite der Fasermatte 10 aufzutragen. Davor kann wieder eine Verdichtungseinrichtung 6 angeordnet sein. Die gebildete Fasermatte 10 wird so abgelegt, dass ein sehr hohes spezifisches Volumen von mehr als 12 cm³/g erreicht wird. Die Auftragsmenge an Wasser liegt in diesem Beispiel zwischen 5% und 20% der Masse der gelegten Fasermatte 10. Der Befeuchtungseinrichtung 7a ist eine Verfestigungseinrichtung 8 in einem Abstand nachgeordnet. Der Abstand ist dabei so gewählt, dass möglichst wenig Wasser in das Innere der Einzelfasern und/oder Faserbündel eindringen kann und zur Bindung an den Oberflächen der Einzelfasern und/oder Faserbündel 12 zur Verfügung steht. Die Verfestigungsvorrichtung 8 folgt spätestens nach 20s nach dem Aufbringen von Wasser. Die Presszeit in der Verfestigungsvorrichtung 8 beträgt hierbei weniger als 1s und jedoch mehr als 0,01ms.

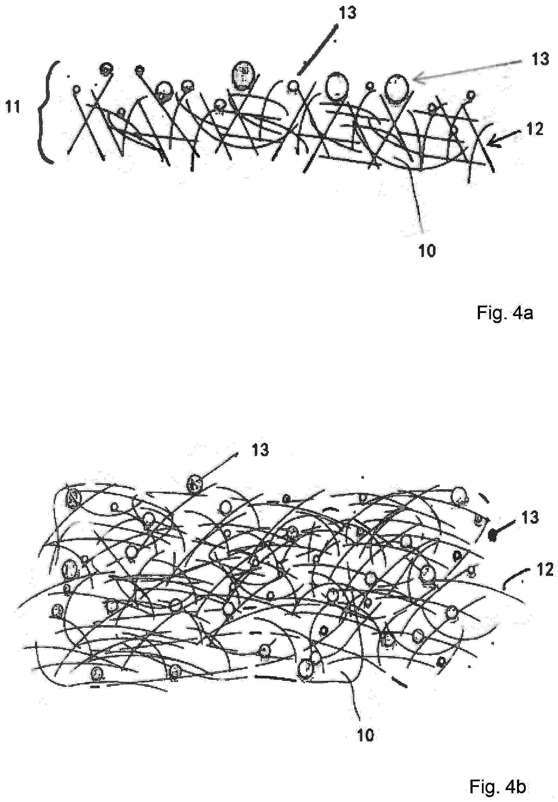

Die Figur 4a zeigt beispielhaft eine Fasermatte 10 mit aufgebrachtem Wasser im Querschnitt in vereinfachter Darstellung. Das Wasser kann in flüssiger Form oder als Dampf, der beim Aufbringen auf die Fasermatte 10 kondensiert aufgebracht werden. Die Einzelfasern und/oder Faserbündel 12 werden in der Trockenformiervorrichtung 4 derart in einem lockeren Gelege zu einer Fasermatte 10 formiert, dass der Abstand der Einzelfasern und/oder Faserbündel 12 zu einer Bildung von Wassertropfen 13 zunächst an der Oberfläche der Fasermatte 10 führt. Der Verfestigungsschritt führt dann zu einer Verteilung des auf die Oberfläche der Fasermatte 10 aufgebrachten Wassers über die Fasermattendicke 11.

Die Figur 4b zeigt beispielhaft eine Fasermatte 10 mit aufgebrachtem Wasser in der Draufsicht in vereinfachter Darstellung.

Die Vorrichtungen 1 der Figuren 1 bis 3 sind für eine kontinuierliche Herstellung einer endlosen flachen Fasermatte 10 geeignet.

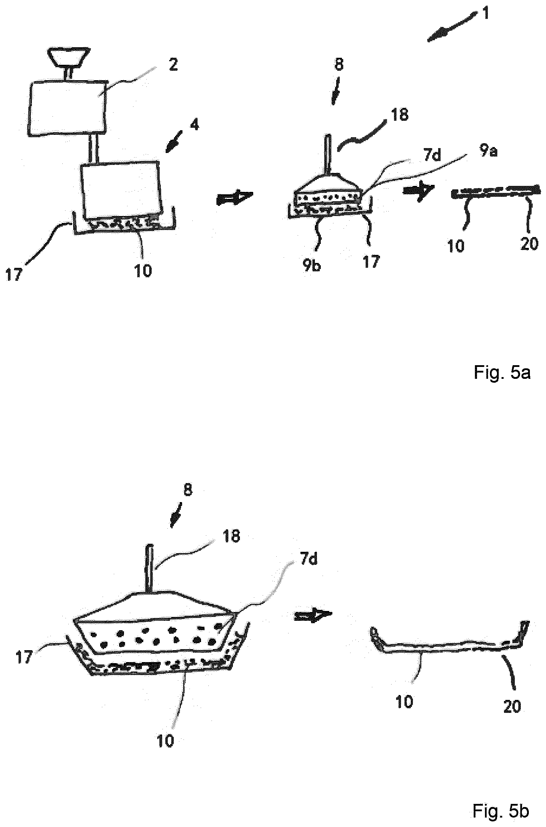

Die Figur 5a zeigt eine erste mögliche Variante einer erfindungsgemäßen Vorrichtung 1 für den diskontinuierlichen Herstellungsprozess in vereinfachter Darstellung. Die flächige Fasermatte 10 wird stückweise als plattenartiges Produkt 20 hergestellt. Solche Produkte 20 können beispielsweise in einem Weiterverarbeitungsschritt zur Schachteln oder Kisten verarbeitet werden. Nach der Aufbereitungsanlage 2 werden die Einzelfasern und/oder Faserbündel 12 einer Trockenformiervorrichtung 4 zugeführt und in einer der Trockenformiervorrichtung 4 zugeordneten Formierform 17 zu einem Stück Fasermatte 10 gelegt. Anschließend wird sie durch eine nicht dargestellte, separate Befeuchtungseinrichtung befeuchtet und danach mit einem in seiner Geometrie auf die Formierform 17 abgestimmten Stempel 18, durch Pressen verfestigt. Auch hier kann der Stempel 17 beheizt sein. Bei der in der Figur 5a dargestellten Vorrichtung 1, umfasst der Stempel ein eine Kontaktfläche aufweisendes Auftragselement 7d. Dieses ist als poröse, kompressible Schicht mit dem Stempel verbunden. Nach jedem Pressvorgang wird das Auftragselement befeuchtet. Der Stempel 18 und die Formierform17 bilden zusammen die Verfestigungsvorrichtung 8 und das Auftragselement 7d und die Formierform 17 wirken als Stützelemente 9a, 9b.

Die Figur 5b zeigt eine zweite mögliche Variante einer erfindungsgemäßen Vorrichtung 1 für den diskontinuierlichen Herstellungsprozess in vereinfachter Darstellung. Diese Vorrichtung zeigt einen Ausschnitt aus der in der Figur 5a dargestellten Vorrichtung. Im Unterschied zu Figur 5a wird anstelle eines flächigen Produktes in einem Schritt ein dreidimensionales Produkt 20 hergestellt. Dabei wird die flächige Fasermatte 10 in einer räumlichen Formierform 17 zur Erzeugung eines dreidimensionalen Produktes 20 formiert und verfestigt. Die Formierform 17 und der Stempel 18 sind dabei auf die Geometrie des Produktes 20 abgestimmt. Dreidimensionale Produkte 20 können Schachteln, Kisten usw. oder Teile davon sein.

Korrespondierende Elemente der Ausführungsbeispiele in den Figuren sind mit gleichen Bezugszeichen versehen. Die Funktionen solcher Elemente in den einzelnen Figuren entsprechen einander, sofern nichts anderes beschrieben ist und es nicht zu Widersprüchen führt. Auf eine wiederholte Beschreibung wird daher verzichtet. Es wird auch darauf hingewiesen, dass die sich unterscheidenden Merkmale der gezeigten Ausführungsbeispiele gegeneinander ausgetauscht und miteinander kombiniert werden können. Die Erfindung ist daher nicht auf die gezeigten Merkmalskombinationen der gezeigten Ausführungsbeispiele beschränkt.

### Bezugszeichenliste

- 1: Vorrichtung
- 2: Aufbereitungsanlage
- 3: Zyklon
- 3a: Luft
- 4: Trockenformiervorrichtung
- 5: Formierband
- 6: Verdichtungseinrichtung
- 7a: Befeuchtungseinrichtung
- 7b: Befeuchtungseinrichtung
- 7c: Befeuchtungseinrichtung
- 7d: Auftragselement
- 8: Verfestigungsvorrichtung
- 9a: Stützelement
- 9b: Stützelement
- 10: Fasermatte
- 11: Fasermattendicke
- 12: Einzelfasern und/oder Faserbündel
- 13: Wassertropfen
- 14: Presselement
- 15: Presswalze
- 16: Umlenkwalze
- 17: Formierform
- 18: Stempel
- 20: Produkt
- 21: Aufrollung
- 22: Laufrichtung

## Patentansprüche

1. Verfahren zur Herstellung einer Fasermatte, die insbesondere zur Verwendung bei der Herstellung von Verpackungskarton oder faserstoffhaltigen Konstruktionselementen geeignet ist, aus einer faserstoffhaltigen Ware, insbesondere Recyclingware, umfassend Wellpappenabfälle und/oder Kartonabfälle und/oder Altpapier und/oder Papier- oder Kartonabfälle aus der Papierherstellung, umfassend folgende Schritte:
a. Sammeln und Bereitstellen der faserstoffhaltigen Ware, insbesondere Recyclingware;
b. Wasserarme Aufbereitung der faserstoffhaltigen Waren, insbesondere Recyclingware, im Luftstrom zu Rohstoffware umfassend Einzelfasern und/oder Faserbündel;
c. Formieren der Einzelfasern und/oder Faserbündel (12) im Luftstrom zu einer flächigen Fasermatte (10) durch ein Trockenformierungsverfahren auf einem Formierband (5);
d. Aufbringen von Wasser auf die Fasern der formierten Fasermatte (10);
e. Verfestigen der formierten Fasermatte (10);
wobei die Fasermatte (10) im Verfestigungsschritt e) zwischen zwei, jeweils eine der Fasermatte (10) zugewandten Kontaktfläche aufweisenden,
Stützelementen (9a, 9b) liegend mit einer Presszeit von weniger als 1s, insbesondere von weniger als 0,8s, vorzugsweise von weniger als 0,5s gepresst wird und wobei das Formierband (5) und/oder wenigstens eines der beiden Stützelement (9a, 9b), welches als Band ausgeführt ist, als Membran ausgeführt ist bzw. sind.

2. Verfahren nach Anspruch 1,
**dadurch gekennzeichnet, dass**
das Band permeabel ausgebildet ist und in Dickenrichtung Öffnungen, Bohrungen oder dergleichen aufweist.

3. Verfahren nach Anspruch 2,
**dadurch gekennzeichnet, dass**
Durchmesser der Öffnungen im Bereich zwischen 0,1 mm und weniger als 3 mm liegen.

4. Verfahren nach Anspruch 2 oder 3,
**dadurch gekennzeichnet, dass**
ein Abstand benachbarter Öffnungen im Bereich von 0,3mm bis 3mm liegt.

5. Verfahren nach Anspruch 2, 3 oder 4,
**dadurch gekennzeichnet, dass**
zwischen den Öffnungen liegende, Stützzonen bildende Landflächen eine Strukturierung aufweisen.

6. Verfahren nach einem der Ansprüche 3 bis 5,
**dadurch gekennzeichnet, dass**
die Öffnungen durch Bohren mittels Laser erzeugt sind.

7. Verfahren nach einem der vorhergehenden Ansprüche,
**dadurch gekennzeichnet, dass**
das wenigstens eine als Band ausgebildete Stützelement (9b) als Band eines Bandkalanders gebildet ist.

8. Verfahren nach Anspruch 7,
**dadurch gekennzeichnet, dass**
das Material des Bandkalanderbands Metall oder Kunststoff oder Verbundmaterial umfasst.

9. Verfahren nach einem der vorhergehenden Ansprüche,
**dadurch gekennzeichnet, dass**
dem als Band ausgeführten Stützelement (9b) ein auf der Fasermatte (10) abgewandten Seite angeordnetes Presselement (14) zum Pressen der Fasermatte (10) zugeordnet ist.

10. Verfahren nach Anspruch 9,
**dadurch gekennzeichnet, dass**
das Presselement (14) als Walze, als Schuhwalze oder als Bandpresse ausgeführt ist.

11. Verfahren nach einem der vorhergehenden Ansprüche,
**dadurch gekennzeichnet, dass**
das Formierband (5) und das wenigstens eine als Band ausgebildete Stützelement (9b) ein und dasselbe Band sind.

12. Verfahren nach einem der Ansprüche 1 bis 10,
**dadurch gekennzeichnet, dass**
das Formierband (5) und das wenigstens eine als Band ausgebildete Stützelement (9a) als separate Bänder ausgebildet sind.

13. Verfahren nach einem der vorhergehenden Ansprüche,
**dadurch gekennzeichnet, dass**
im Aufbringschritt d) die gelegte Fasermatte (10) mit einer Wassermenge im Bereich zwischen 5% und 50%, insbesondere zwischen 5% und 40%, vorzugsweise zwischen 5% und 30% der Masse der gelegten Fasermatte (10) beaufschlagt wird.

14. Verfahren nach einem der vorhergehenden Ansprüche,
**dadurch gekennzeichnet, dass**
die flächige Fasermatte (10) endlos hergestellt wird.

15. Vorrichtung zur Durchführung des Verfahrens nach einem der vorhergehenden Ansprüche zur Herstellung einer Fasermatte (10), die insbesondere zur Verwendung bei der Herstellung von Verpackungskarton oder faserstoffhaltigen Konstruktionselementen geeignet ist, aus einer faserstoffhaltigen Ware, insbesondere Recyclingware, umfassend Wellpappenabfälle und/oder Kartonabfälle und/oder Altpapier und/oder Papier- oder Kartonabfälle aus der Papierherstellung, mit einer Aufbereitungsanlage (2) zur wasserarmen Aufbereitung der faserstoffhaltigen Ware, insbesondere Recyclingware, im Luftstrom zu Rohstoffware welche Einzelfasern und/oder Faserbündel (12) umfasst; und mit einer Trockenformiervorrichtung (4) zum Formieren der Einzelfasern und/oder Faserbündel (12) im Luftstrom zu einer flächigen Fasermatte (10) auf einem Formierband (5), sowie mit einer Befeuchtungseinrichtung (7a, 7b, 7c) zum Aufbringen von Wasser auf die Einzelfasern und/oder Faserbündel (12) der formierten Fasermatte (10) und mit einer Verfestigungsvorrichtung (8) zum Verfestigen der formierten Fasermatte (10),
wobei die Fasermatte (10) in der Verfestigungsvorrichtung (8) zwischen zwei, jeweils eine der Fasermatte (10) zugewandten Kontaktfläche aufweisenden, Stützelementen (9a, 9b) angeordnet ist und gepresst wird und dass die Verfestigungsvorrichtung (8) derart ausgeführt ist, dass die Presszeit weniger als 1s, insbesondere weniger als 0,8s, vorzugsweise weniger als 0,5s beträgt und wobei das Formierband (5) und/oder wenigstens eines der beiden Stützelement (9a, 9b), welches als Band ausgeführt ist, als Membran ausgeführt ist bzw. sind.
